# EUROPÄISCHE PATENTANMELDUNG

(11) **EP 0 718 925 A1**
(43) Veröffentlichungstag der Anmeldung: **26.06.1996**
(21) Anmeldenummer: 95109221.2
(22) Anmeldetag: 14.06.1995
(51) Int. Cl.: H01R 13/703

(54) **Steckdose für eine mehrpolige Steckverbindung zwischen einem Zugfahrzeug und einem Anhänger**

(30) Priorität: 21.12.1994 DE 4445706
(71) Anmelder: Gebhard, Dietrich, D-76316 Malsch (DE)
(72) Erfinder: Gebhard, Dietrich, D-76316 Malsch (DE)
(74) Vertreter: Otten, Hajo, Dr.-Ing.

(57) **Zusammenfassung**

Eine Steckdose für eine mehrpolige Steckverbindung zwischen einem Zugfahrzeug und einem Anhänger weist mehrere, in Öffnungen (14, 15, 16) eines Kontaktträgers (10) aufgenommene Kontakte (18, 26) auf, in die Kontaktstifte (35) eines einzuschiebenden Steckers eingreifen, um den Anhänger elektrisch an das Zugfahrzeug anzuschließen. Es sind Mittel vorgesehen, die bei elektrisch angeschlossenem Anhänger auf einer Anhängererkennungsleitung (32) im Zugfahrzeug ein Massesignal liefern. Bei der neuen Steckdose umfassen die Mittel einen einem Kontakt (26) zugeordneten Schaltmechanismus (33), der mit einem in den einen Kontakt (26) eingeschobenen Kontaktstift (35) derart in Wirkverbindung steht, daß auf die Anhängererkennungsleitung (32) eine Massesignal geschaltet ist.

## Beschreibung

Die Erfindung betrifft eine Steckdose für eine mehrpolige Steckverbindung zwischen einem Zugfahrzeug und einem Anhänger, mit mehreren, in Öffnungen eines Kontaktträgers aufgenommenen Kontakten, in die Kontaktstifte eines einzuschiebenden Steckers eingreifen, um den Anhänger elektrisch an das Zugfahrzeug anzuschließen, wobei Mittel vorgesehen sind, die bei elektrisch angeschlossenem Anhänger auf einer Anhängererkennungsleitung im Zugfahrzeug ein Massesignal liefern.

Eine derartige Steckdose ist aus der Praxis bekannt.

Die bekannte, insbesondere 7- oder 13-polige Steckdose weist als Pol 3 einen Massekontakt auf, über den die Masse des Zugfahrzeuges an den Anhänger übergeben wird. Ferner ist ein weiterer Kontakt vorgesehen, über den die so festgelegte Masse des Anhängers zu dem Zugfahrzeug zurückgeschleift und dort auf die Anhängererkennungsleitung gelegt wird. Das so auf die Anhängererkennungsleitung geschaltete Massesignal verwenden unterschiedliche Baugruppen des Zugfahrzeuges, die bei angekoppeltem Anhänger in einen anderen Betriebszustand gehen sollen. Zu diesen Baugruppen zählen z.B. Stoßdämpfer, Beleuchtung, Motormanagement, etc.

Der bisher so für die Anhängererkennung verwendete Kontakt ist jedoch nicht mehr vorgesehen, wird anderweitig beschaltet oder ist auf der Anhängerseite nicht angeschlossen. Daraus folgt, daß es mit der bekannten Steckdose nicht möglich ist, eine zuverlässige Anhängererkennung zu realisieren.

Aus diesem Grunde ist man dazu übergegangen, die Anhängererkennung auf elektrischem/elektronischem Wege über Schaltgruppen zu realisieren, die aus bestimmten Schalt- und Belastungszuständen von Lampen der Signal- und Beleuchtungsanlage des Zugfahrzeuges und ggf. des Anhängers ein Anhängererkennungssignal ableiten. Derartige Schaltungen sind bspw. in der DE-OS-41 35 546, DE-OS-41 34 993 oder DE-OS-43 39 128 beschrieben. Beim Nachrüsten eines Zugfahrzeuges mit einer Steckdose zum elektrischen Anschließen eines Anhängers müssen diese Schaltungen als Module mit in das Zugfahrzeug eingebaut werden, sofern sie nicht bereits werksseitig vorgesehen sind. Insbesondere bei neuen Zugfahrzeugen sind solche Module jedoch häufig weder vorgesehen noch nachträglich einbaubar.

Weiter ist es allgemein bekannt, zusätzliche Schalter zum Unterbrechen der Stromzufuhr zur Nebelschlußleuchte des Zugfahrzeuges an einer Steckdose vorzusehen. Dadurch wird eine Beeinträchtigung des Führers des Zugfahrzeuges verhindert, wenn bei angekoppeltem Anhänger die Nebelschlußleuchte eingeschaltet wird. Würde nämlich die am Heck des Zugfahrzeuges angeordnete Nebelschlußleuchte auch bei Betrieb mit Anhänger ihr extrem starkes Licht abgeben, so würde der Fahrer über die Reflexionen dieses Lichtes an dem Anhänger stark geblendet werden. Eine derartige Steckdose ist bspw. aus dem deutschen Gebrauchsmuster G 88 11 182 bekannt.

Bei dieser Steckdose ist der Schalter dadurch realisiert, daß in den Ringraum der Steckdose zwischen Außenseite des mittigen Kontaktträgers, in dem die Kontakte aufgenommen sind, und der Innenseite der Dose ein sich in Längsrichtung der Kontakte erstreckender Stift vorgesehen ist, der mit einer Kontaktzunge verbunden ist. Wird nun ein Stecker in die Steckdose eingeschoben, so trifft dessen umfängliche Stirnkante auf den Stift und drückt diesen axial nach innen und öffnet dabei eine elektrische Verbindung zu der Nebelschlußleuchte des Zugfahrzeuges. Einer der Kontaktstifte des eingeschobenen Steckers ist für den elektrischen Anschluß der Nebelschlußleuchte am Heck des Anhängers vorgesehen.

Bei dieser Anordnung besteht die Gefahr, daß sich mit dem Stecker in die Steckdose eingebrachte Verschmutzungen so zwischen die bewegten Teile setzen, daß diese nicht mehr beweglich sind. Es ist nämlich bekannt, daß zahlreiche Betreiber von Anhängern den Stecker bei abgekoppeltem Anhänger nicht in die Parkdose einschieben, sondern oftmals achtlos auf dem Boden liegen lassen, so daß sich insbesondere im Bereich der äußeren ringförmigen Stirnkante Verschmutzungen in Form von Erde, Sand oder dergleichen ansammeln können. Wird nun ein derartig verschmutzter Stecker in die bekannte Steckdose eingeschoben, so trifft die verschmutzte Kante auf den Stift und schiebt diesen axial nach innen, wobei der Schmutz gleichzeitig mit in die Führung des Stiftes eingedrückt werden kann, so daß es zu dem oben erwähnten Verklemmen kommt.

Ferner wurde beobachtet, daß es durch die rauhe Handhabung des Steckers, bspw. beim achtlosen Fallenlassen möglich ist, daß im stirnseitigen Randbereich des Steckers, der meist aus einem Kunststoffmaterial hergestellt ist, Teile ausbrechen können. Brechen nun Teile aus, die gerade in dem Bereich liegen, in dem der Stecker mit dem Stift in Berührung treten soll, um diesen axial zu verschieben, ist dieses dann nicht mehr möglich.

Vor diesem Hintergrund ist es Aufgabe der vorliegenden Erfindung, die eingangs genannte Steckdose derart weiterzubilden, daß bei kontruktiv einfachem und sicher arbeitendem Aufbau eine sichere Anhängererkennung auch bei modernen Zugfahrzeugen und/oder bei nicht richtig verschalteten Anhängern möglich ist.

Erfindungsgemäß wird diese Aufgabe bei der eingangs genannten Steckdose dadurch gelöst, daß die Mittel einen einem Kontakt zugeordneten Schaltmechanismus umfassen, der mit einem in den einen Kontakt eingeschobenen Kontaktstift derart in Wirkverbindung steht, daß auf die Anhängererkennungsleitung ein Massesignal geschaltet ist.

Die der Erfindung zugrunde liegende Aufgabe wird auf diese Weise vollkommen gelöst. Es ist jetzt lediglich erforderlich, in den einen Kontakt einen Kontaktstift einzuschieben, um auf diese sozusagen mechanische Weise ein Massesignal auf die Anhängererkennungsleitung zu schalten. Es ist jedoch nicht mehr erforderlich, daß dieser eingeschobene Kontaktstift mit der Masse des Anhängers in Verbindung steht, wie dies bei der gattungsbildenden Steckdose der Fall ist. Ein nicht richtig verschalteter Anhänger führt also nicht mehr zu einem Versagen der Anhängererkennung.

Dabei ist es insbesondere bevorzugt, wenn der Schaltmechanismus im Inneren des Kontaktträgers angeordnet ist.

Hier ist von Vorteil, daß der Schaltmechanismus Teil der Steckdose ist, so daß er sozusagen automatisch bei dem Nachrüsten der Steckdose mit eingebaut wird. Auf diese Weise lassen sich auch moderne Zugfahrzeuge nachträglich mit einer Anhängererkennung ausrüsten, obwohl der Einbau der oben erwähnten Module aus technischen Gründen nicht möglich ist. Ferner ist der Schaltmechanismus vor Verschmutzungen, Beschädigungen etc. geschützt, da er im Inneren des Kontaktträgers ruht. Auf diese konstruktiv einfache Weise wird für eine hohe technische Zuverlässigkeit der neuen Steckdose gesorgt.

Insgesamt ist es bevorzugt, wenn der eine Kontakt der Massekontakt ist, über den die Masse des Zugfahrzeuges mit der Masse des Anhängers verbunden wird.

Hier ist von Vorteil, daß kein weiterer Kontakt in der Steckdose "geopfert" werden muß, um den Schaltmechanismus zu realisieren. Vielmehr kann der sowieso erforderliche Massekontakt, der oft als 31 bezeichnet wird, dazu verwendet werden, einerseits die Masse des Zugfahrzeuges an den Anhänger zu übergeben und andererseits die Masse des Zugfahrzeuges auf die Anhängererkennungsleitung zu schalten. Ferner kann somit auf eine gesonderte Zuleitung zu der Steckdose verzichtet werden, da der schon vorhandene Massekontakt jetzt sozusagen zweifach ausgenutzt wird.

Weiter ist es bevorzugt, wenn der Schaltmechanismus ein Schließschalter ist, dessen erster Pol mit dem Massekontakt und dessen zweiter Pol mit der Anhängererkennungsleitung verbunden ist, wobei der eingeschobene Kontaktstift für eine elektrische Verbindung der beiden Pole sorgt.

Diese Maßnahme ist unter konstruktiven Gesichtspunkten bevorzugt, da jetzt der Kontaktstift sozusagen als Betätigungselement für den Schließschalter wirkt. Diese Maßnahme hat auch Vorteile hinsichtlich der Betriebssicherheit, denn bei den bekannten Steckern sind die Kontaktstifte durch eine diese umgebende Kunststoffhülse weitgehend vor Verschmutzung geschützt, so daß selbst bei dem oben erwähnten rauhen Umgang mit dem Stecker ein Eintrag von Schmutz und/oder Feuchtigkeit in den Bereich des Schließschalters vermieden wird.

Ferner ist es bevorzugt, wenn bei eingeschobenem Kontaktstift über diesen die beiden Pole elektrisch miteinander verbunden sind.

Diese Maßnahme ist ebenfalls unter konstruktiven Gesichtspunkten von Vorteil, da sie einen besonders einfachen Aufbau des Schließschalters ermöglicht. Der Kontaktstift selbst ist nämlich nun das Überbrückungsteil, das die beiden Pole des Schließschalters elektrisch miteinander verbindet, so daß der Schließschalter selbst ohne mechanisch bewegte Teile aufgebaut werden kann. Dieser Aufbau ist nicht nur sehr einfach und preiswert, er benötigt auch relativ wenig Raum in dem Inneren des Kontaktträgers, so daß sich die bekannte Steckdose ohne größere bauliche Maßnahmen umkonstruieren läßt.

Dabei ist es dann bevorzugt, wenn der Kontakt zwei voneinander isolierte, elektrisch leitende Bereiche umfaßt, die die beiden Pole des Schließschalters bilden, wobei die beiden Bereiche entweder in Richtung der Einschiebbewegung des Kontaktstiftes hintereinander oder aber quer zu der Richtung der Einschiebbewegung nebeneinander angeordent sind.

Hier ist von Vorteil, daß der erforderliche Platzbedarf in dem Inneren des Kontaktteiles noch einmal reduziert wird, wobei sich auch konstruktive Vorteile ergeben. Es ist nämlich lediglich erforderlich, einen sowieso vorgesehenen Kontakt entweder in dessen Längsrichtung oder quer zu dessen Längsrichtung in zwei voneinander isolierte Bereiche aufzuteilen, die durch den eingeschobenen Kontaktstift dann wieder elektrisch miteinander verbunden werden. Der eine Bereich des Kontaktstiftes ist dabei mit der Masse des Zugfahrzeuges und der andere mit der Anhängererkennungsleitung verbunden, so daß ein konstruktiv sehr einfacher Schaltmechanismus realisiert ist, der neben seiner geringen Baugröße auch eine hervorragende Betriebssicherheit aufweist.

Weiter ist es bevorzugt, wenn der Kontaktstift beim Einschieben ein bewegliches Kontaktteil quer zu seiner Einschiebbewegung radial nach außen bewegt, wodurch der Schließschalter seine beiden Pole elektrisch miteinander verbindet. Der Schließschalter weist dabei vorzugsweise eine mit einem ihrer Pole verbundene elastische Kontaktzunge auf, die derart radial in Richtung des Kontaktes vorgespannt ist, daß der eingeschobene Kontaktstift zwischen einem Hülsenabschnitt des Kontaktes und der Kontaktzunge eingeklemmt ist.

Bei dieser Maßnahme ist von Vorteil, daß auf technisch einfache Weise ein Schließschalter realisiert wird, der gleichzeitig einen sicheren Sitz des Kontaktstiftes in dem Kontakt ermöglicht.

Es versteht sich, daß die vorstehend genannten und die nachstehend noch zu erläuternden Merkmale nicht nur in der angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der beiliegenden Zeichnung, in der
- Fig. 1: eine Längsschnitt eines Kontaktträgers einer neuen Steckdose in dem Schaltzustand zeigt, in dem kein Stecker eingeschoben ist,
- Fig. 2: einen Schnitt längs der Linie 2-2 aus Fig. 1 zeigt,
- Fig. 3: den Kontaktträger aus Fig. 1 in einer Betriebsstellung zeigt, in der ein Kontaktstift eines Steckers eingeschoben ist, und
- Fig. 4: in schematischer Darstellung vier verschiedene Ausführungsbeispiele für Schaltmechanismen zeigt, wie sie bei einer neuen Steckdose Anwendung finden.

Eine erfindungsgemäße Steckdose weist ein Steckdosengehäuse auf, das über einen federbelasteten Deckel verschließbar ist, wie dies auf dem einschlägigen Gebiet hinreichend bekannt ist. Üblicherweise wird eine derartige Steckdose im Heckbereich eines Zugfahrzeuges montiert oder nachgerüstet.

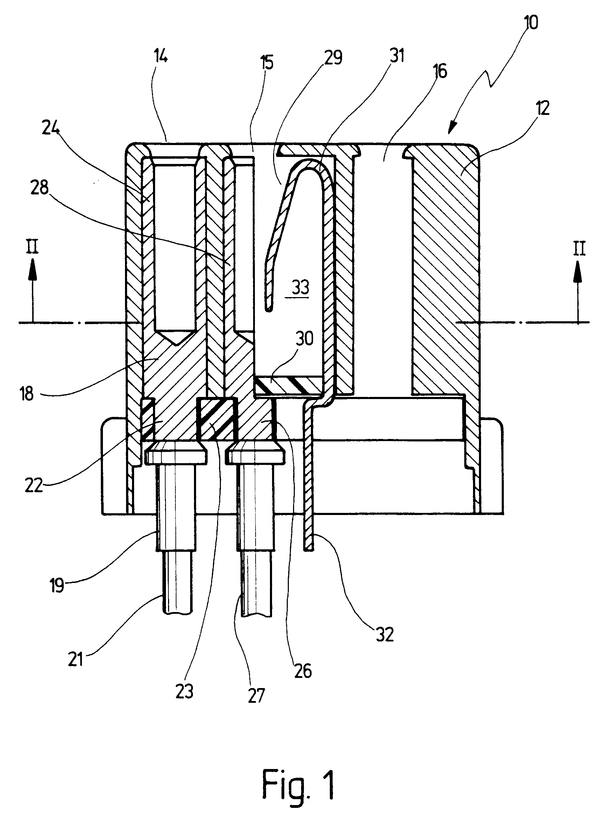

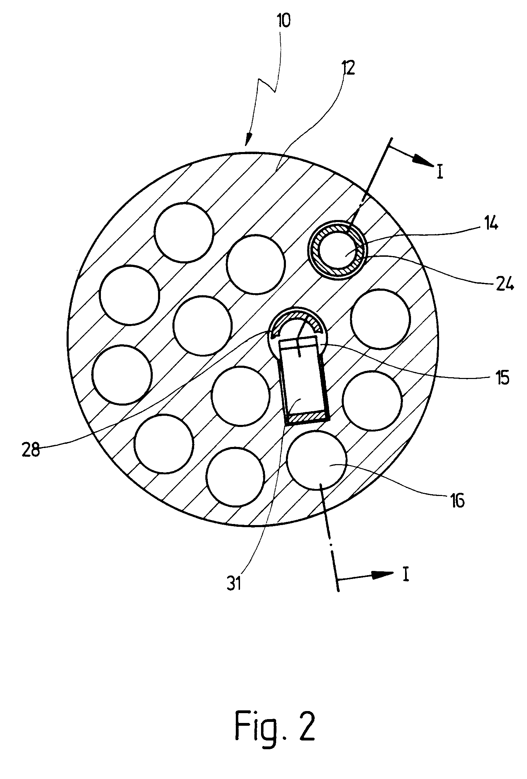

Im Inneren einer derartigen Steckdose ist vom bodenseitigen Ende her ein in Fig. 1 im Längsschnitt dargestellter Kontaktträger 10 eingesetzt. Wie es insbesondere aus dem Schnitt aus Fig. 2 erkennbar ist, weist der Kontaktträger 10 einen zylindrischen Körper 12 auf, der zahlreiche zylindrische Öffnungen mit kreisförmigem Querschnitt umfaßt, die durch die Längserstreckung des Kontaktträgers 10 hindurchreichen. Eine derartige Anordnung ist an sich ebenfalls bekannt.

Aus der Schnittdarstellung von Fig. 2 ist zu erkennen, daß es sich hier um eine 13-polige Steckdose handelt, bei der dementsprechend 13 Öffnungen im Kontaktträger 10 vorgesehen sind. Das genormte Lochbild ist dabei dergestalt, daß neun Öffnungen zur Aufnahme von Kontakten auf einem Umfangskreis angeordnet sind, die vier innere Öffnungen umschließen.

In der Schnittdarstellung von Fig. 1 sind drei Öffnungen 14, 15 und 16 zu erkennen.

In die Öffnung 14 ist in der Darstellung aus Fig. 1 von unten ein Kontakt 18 eingeschoben, der an seinem äußeren, über den Kontaktträger 10 vorstehenden Ende ein Leiteranschlußteil 19 aufweist, das zur Verbindung mit einem Kabel 21 dient. Die Verbindung kann auf die verschiedenen, in diesem Fachgebiet üblichen Weisen erfolgen, z.B. durch eine Schraubverbindung, durch Verlöten oder insbesondere durch Vercrimpen.

An das Leiteranschlußteil 19 des Kontaktes 18 schließt sich ein im Durchmesser verjüngter Hals 22 an, der dazu dient, die vorkonfektionierten Kontakte in Öffnungen einer Scheibe 23 aufzunehmen, wie dies auf diesem Fachgebiet ebenfalls bekannt ist.

An den Hals 22 des Kontaktes 18 schließt sich in Fig. 1 nach oben eine Hülse 24 an, deren Außendurchmesser in etwa dem Innendurchmesser der Öffnung 14 entspricht. Die Hülse 24 weist einen inneren, zur Stirnseite des Kontaktträgers 10 hin offenen Hohlraum auf, in den ein entsprechender Kontaktstift eines Steckers eingeschoben werden kann.

Es sei noch erwähnt, daß bei dem in den Fig. 1 bis 3 gezeigten Kontaktteil die Öffnung 16 nicht mit einem Kontakt versehen ist.

In die Öffnung 15 dagegen ist ein Massekontakt 26 eingeschoben, der mit einer bei 27 angedeuteten Masseleitung verbunden ist, die zu der Masse des Zugfahrzeuges führt. Die Hülse 24 des Massekontaktes 26 ist als Hülsenabschnitt 28 ausgebildet und weist in der Querschnittsdarstellung der Fig. 2 eine halbringförmige oder sichelförmige Gestalt auf.

Während die Öffnungen 14 und 16 zylindrische Durchgangsöffnungen sind, ist an die Öffnung 15 ein rechtwinkliger Freiraum 29 angeschlossen, in dem über ein isolierendes Distanzstück 30 eine elastische Kontaktzunge 31 gehalten ist. Die elektrisch leitende Kontaktzunge 31 ragt nach unten aus dem Kontaktträger 10 heraus und geht dort in eine Anhängererkennungsleitung 32 über, deren Bedeutung noch erläutert wird.

Der Hülsenabschnitt 28 und die Kontaktzunge 31 bilden einen Schaltmechanismus 33, über den die Masseleitung 27 mit der Anhängererkennungsleitung 32 verbunden werden kann.

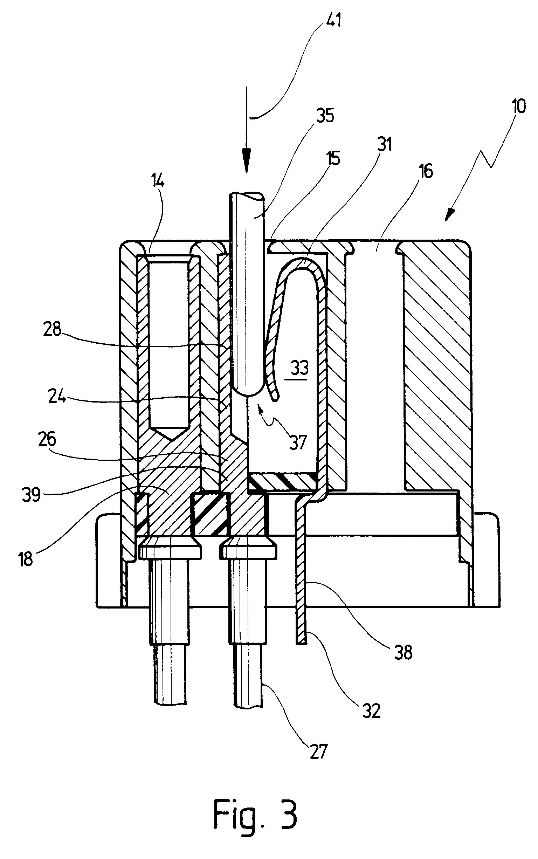

Dies erfolgt, wenn - wie in Fig. 3 gestellt - ein elektrisch leitender Kontaktstift 35 eines Steckers in die Öffnung 15 eingeschoben wird. Der Kontaktstift 35 wird von der elastischen Kontaktzunge 31 gegen den Hülsenabschnitt 28 gedrückt, so daß der Kontaktstift 35 sicher in der Öffnung 15 sitzt, obwohl die Hülse 24 nur abschnittsweise ausgebildet ist.

Auf diese Weise wird durch den Hülsenabschnitt 28, die Kontaktzunge 31 und den Kontaktstift 35 eine Art Schließschalter 37 gebildet, der vollständig in dem Inneren des Kontaktträgers 10 angeordnet ist.

Der eingeschobene Kontaktstift 35 stellt eine leitende Verbindung zwischen dem Hülsenabschnitt 28 und der Kontaktzunge 31 her, wodurch die Masseleitung 27 auf die Anhängererkennungsleitung 32 geschaltet wird. Dieses auf der Anhängererkennungsleitung 32 anstehende Massesignal wird jetzt von Baugruppen des Zugfahrzeuges verwendet, um das Betriebsverhalten des Zugfahrzeuges an die Tatsache anzupassen, daß ein Anhänger an das Zugfahrzeug angekoppelt ist. Mit anderen Worten, an Hand des Massesignales auf der Anhängererkennungsleitung 32 erkennen diese Baugruppen, ob ein Anhänger an das Zugfahrzeug angekoppelt wurde und ändern entsprechend ihren Betriebszustand oder ihr Betriebsverhalten. Zu diesen Baugruppen können bspw. die Stoßdämpfer zählen, die bei angekoppeltem Anhänger ein anderes Dämpfungsverhalten aufweisen als ohne Anhänger. Ferner kann die Information auf der Anhängererkennungsleitung in der Signal- und Beleuchtungsanlage, bei dem Motormanagement etc. verwendet werden.

Es sei noch erwähnt, daß der Schließschalter 37 zwei Pole 38, 39 aufweist, die mit der Anhängererkennungsleitung 32 bzw. dem Massekontakt 26 verbunden sind und durch die bei 41 angedeutete Einschiebbewegung des Kontaktstiftes 35 über diesen zusammengeschaltet werden.

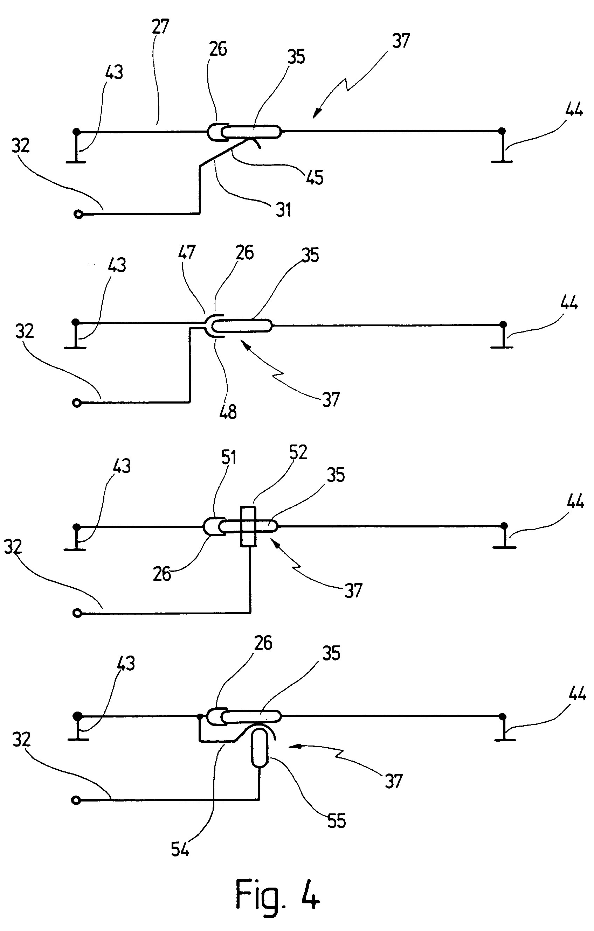

In Fig. 4 sind vier verschiedene Ausführungsbeispiele für Schließschalter gezeigt, wie sie bei der neuen Steckdose Verwendung finden.

In dem obersten Ausführungsbeispiel in Fig. 4 ist schematisch der Schließschalter 37 aus den Fig. 1 bis 3 gezeigt, bei dem Massekontakt 26 und Kontaktstift 35 eine bei 43 angedeutete Masse des Zugfahrzeuges mit einer bei 44 angedeuteten Masse des Anhängers verbinden. Über die elastische Kontaktzunge 31, die als bewegliches Kontaktteil 45 elektrisch mit dem eingeschobenen Kontaktstift 35 verbunden ist, wird die Masse 43 auf die Anhängererkennungsleitung 32 geschaltet.

Von besonderem Vorteil bei dieser Konstruktion ist die Tatsache, daß keine weitere Leitung zu der Steckdose geführt werden muß. Die sowieso zu dem Massekontakt 26 geführte Masseleitung 27 wird über den Schließschalter 37 lediglich unmittelbar auf die Anhängererkennungsleitung 32 zurückgeschleift, wobei das Aufschalten des Massesignales auf die Anhängererkennungsleitung 32 rein mechanisch erfolgt.

In dem in Fig. 4 zweiten Beispiel von oben ist der Massekontakt 26 in zwei voneinander isolierte Bereiche 47, 48 aufgeteilt, die quer zu der Einsteckrichtung des Kontaktstiftes 35 nebeneinander angeordnet sind. Der Bereich 47 ist mit der Masse 43 verbunden, während der Bereich 48 mit der Anhängererkennungsleitung 32 verbunden ist. Bei eingeschobenem Kontaktstift 35 werden die beiden Bereiche 47, 48 elektrisch miteinander verbunden, so daß die Masse 43 nicht nur mit der Masse 44 verbunden sondern gleichzeitig auf die Anhängererkennungsleitung 32 aufgeschaltet wird.

In dem in Fig. 4 dritten Ausführungsbeispiel von oben ist der Massekontakt 26 in zwei zueinander isolierte Bereiche 51, 52 aufgeteilt, die in Einsteckrichtung des Kontaktstiftes 35 hintereinander angeordnet sind. Der Bereich 51 ist mit der Masse 43 und der ringförmig ausgebildete Bereich 52 mit der Anhängererkennungsleitung 32 verbunden. Auch hier verbindet der einschobene Kontaktstift 35 die beiden Bereiche 51, 52 elektrisch miteinander und schaltet somit die Masse 43 auf die Anhängererkennungsleitung 32.

In dem unteren Ausführungsbeispiel aus Fig. 4 schließlich ist der Schließschalter 37 unabhängig von dem Massekontakt 26 und dem Kontaktstift 35 ausgebildet. Der Schließschalter 37 umfaßt ein bewegliches Kontaktteil 54, das einen Endes mit dem Massekontakt 26 verbunden ist. Durch die Einschiebbewegung des Kontaktteiles 35 in den Massekontakt 26 wird das bewegliche Kontaktteil 45 radial nach außen, also in Fig. 4 nach unten bewegt und gelangt dabei in Kontakt mit einem Gegenkontakt 55, der seinerseits mit der Anhängererkennungsleitung 32 verbunden ist. Während also bei den oberen drei Ausführungsbeispielen aus Fig. 4 die elektrische Verbindung zwischen den beiden Polen des Schließschalters 37 über den Kontaktstift 35 erfolgt, dient dieser in dem unteren Ausführungsbeispiel aus Fig. 4 lediglich als Betätigungselement für den Schließschalter 35. Mit anderen Worten, das bewegliche Kontaktteil 54 kann gegenüber dem Kontaktstift 35 isoliert ausgebildet sein.

Alle vier soeben beschriebenen Ausführungsbeispiele führen zu einem Schließmechanismus mit sehr geringer Baugröße, der problemlos in dem Inneren des Kontaktträgers 10 untergebracht werden kann, so daß er vor äußeren Einflüssen und Verschmutzung weitgehend geschützt ist. Durch die mechanische Betätigung des Schließschalters 37 ist außerdem gewährleistet, daß auch bei falsch verdrahtetem Anhänger dennoch eine sichere Anhängererkennung gewährleistet ist, sobald der Stecker in die neue Steckdose eingeschoben wurde. Veränderungen an dem Stecker sind nicht erforderlich, es ist lediglich ein neues Kontaktteil 10 für die Steckdose vorzusehen, so daß die neue Steckdose problemlos auch bei bestehenden Zugfahrzeugen nachgerüstet werden kann, ohne daß Eingriffe in das elektrische Bordnetz erforderlich sind.

## Patentansprüche

1. Steckdose für eine mehrpolige Steckverbindung zwischen einem Zugfahrzeug und einem Anhänger, mit mehreren, in Öffnungen (14, 15, 16) eines Kontaktträgers (10) aufgenommenen Kontakten (18, 26), in die Kontaktstifte (35) eines einzuschiebenden Steckers eingreifen, um den Anhänger elektrisch an das Zugfahrzeug anzuschließen, wobei Mittel vorgesehen sind, die bei elektrisch angeschlossenem Anhänger auf einer Anhängererkennungsleitung (32) im Zugfahrzeug ein Massesignal liefern,
dadurch gekennzeichnet,
daß die Mittel einen einem Kontakt (26) zugeordneten Schaltmechanismus (33) umfassen, der mit einem in den einen Kontakt (26) eingeschobenem Kontaktstift (35) derart in Wirkverbindung steht, daß auf die Anhängererkennungsleitung (32) ein Massesignal geschaltet ist.

2. Steckdose nach Anspruch 1, dadurch gekennzeichnet, daß der Schaltmechanismus (33) im Inneren des Kontaktträgers (10) angeordnet ist.

3. Steckdose nach Anspruch 1 oder 2, dadurch gekennzeichnet, daß der eine Kontakt (26) der Massekontakt (26) ist, über den die Masse (43) des Zugfahrzeuges mit der Masse ( 44) des Anhängers verbunden wird.

4. Steckdose nach einem der Ansprüche 1 bis 3, dadurch gekennzeichnet, daß der Schaltmechanismus (33) ein Schließschalter (37) ist, dessen erster Pol (39) mit dem Massekontakt (26) des Zugfahrzeuges und dessen zweiter Pol (38) mit der Anhängererkennungsleitung (32) verbunden ist, wobei der eingeschobene Kontaktstift (35) für eine elektrische Verbindung der beiden Pole (38, 39) sorgt.

5. Steckdose nach Anspruch 4, dadurch gekennzeichnet, daß bei eingeschobenem Kontaktstift (35) über diesen die beiden Pole (38, 39) elektrisch miteinander verbunden sind.

6. Steckdose nach Anspruch 5, dadurch gekennzeichnet, daß der eine Kontakt (26) zwei voneinander isolierte, elektrisch leitende Bereiche (47, 48; 51, 52) umfaßt, die die beiden Pole (38, 39) des Schließschalters (37) bilden.

7. Steckdose nach Anspruch 6, dadurch gekennzeichnet, daß die beiden Bereiche (51, 52) in Richtung der Einschiebbewegung (41) des Kontaktstiftes (35) hintereinander angeordnet sind.

8. Steckdose nach Anspruch 6, dadurch gekennzeichnet, daß die beiden Bereiche (47, 48) quer zu der Richtung der Einschiebbewegung (41) des Kontaktstiftes (35) nebeneinander angeordnet sind.

9. Steckdose nach Anspruch 4 oder 5, dadurch gekennzeichnet, daß der Kontaktstift (35) beim Einschieben ein bewegliches Kontaktteil (45, 54) quer zu seiner Einschiebbewegung (41) radial nach außen bewegt, wodurch der Schließschalter (37) seine beiden Pole (38, 39) elektrisch miteinander verbindet.

10. Steckdose nach Anspruch 5, dadurch gekennzeichnet, daß der Schließschalter (37) eine mit einem ihrer Pole (38) verbundene elastische Kontaktzunge (31) aufweist, die derart radial in Richtung des Kontaktes (26) vorgespannt ist, daß der eingeschobene Kontaktstift (35) zwischen einem Hülsenabschnitt (28) des Kontaktes (26) und der Kontaktzunge (31) eingeklemmt ist.
